# EUROPÄISCHE PATENTSCHRIFT

(11) **EP 3 476 710 B1**
(45) Veröffentlichungstag und Bekanntmachung des Hinweises auf die Patenterteilung: **04.11.2020**
(21) Anmeldenummer: 18194274.9
(22) Anmeldetag: 13.09.2018
(51) Int. Cl.: B62K 21/06, B62K 19/32

(54) **LAGER-HALTEELEMENT**
BEARING HOLDER ELEMENT
ÉLÉMENT DE RETENUE DE PALIER

(30) Priorität: 26.10.2017 DE 202017005537 U
(43) Veröffentlichungstag der Anmeldung: 01.05.2019
(73) Patentinhaber: Canyon Bicycles GmbH, 56073 Koblenz (DE)
(72) Erfinder: Schuchnigg, Lukas, 56068 Koblenz (DE); Heyder, Daniel, 53347 Alfter (DE)
(74) Vertreter: dompatent von Kreisler Selting Werner - Partnerschaft von Patent- und Rechtsanwälten mbB

(56) Entgegenhaltungen:
- EP-A1- 1 879 788
- DE-A1- 19 940 969
- FR-A1- 2 815 928
- JP-U- H04 135 892
- US-A- 5 387 255
- US-A- 6 019 017

## Beschreibung

Die Erfindung betrifft ein Lager-Halteelement für Fahrrad-Steuersatzlager.

In einem Gabelrohr eines Fahrradrahmens wird der Gabelschaft einer Vorderradgabel über Steuersatzlager bzw. Lenkkopflager schwenkbar gelagert. Übliche Steuersätze weisen ein unteres sowie ein oberes Steuersatzlager auf, die am unteren bzw. oberen Ende des Gabelrohrs des Rahmens angeordnet sind. Die beiden Lager des Steuersatzes müssen gegeneinander vorgespannt werden. Das Vorspannen erfolgt mit Hilfe eines Lenkervorbaus. Der Lenkervorbau wird hierzu üblicherweise von oben auf den Gabelschaft aufgesteckt. Durch Justieren des Vorderbaus in Längsrichtung des Gabelschafts erfolgt ein Verspannen der beiden Steuersatzlager. Über üblicherweise tangential zum Gabelschaft verlaufende Schrauben erfolgt sodann ein klemmendes Befestigen des Vorbaus am Gabelschaft.

Ein derartiges Vorspannen der Steuersatzlager hat den Nachteil, dass beispielsweise beim Demontieren des Vorbaus zum Auswechseln des Vorbaus oder beispielsweise zum Transport bei einer anschließenden Neumontage des Vorbaus das Lagerspiel bzw. die Vorspannung der beiden Steuersatzlager wieder eingestellt werden muss. Hierbei besteht stets das Risiko, dass bei einem zu starken Vorspannen aufgrund der zu hohen Reibung in den Lagern eine Beschädigung der Lager auftritt. Bei einem zu leichten Vorspannen können die Lager ausschlagen und ein sicherer Halt des Gabelschafts im Gabelrohr ist nicht gewährleistet. Es empfiehlt sich daher stets, dass die Montage eines Vorbaus und somit das Justieren der beiden Steuersatzlager nur von einem Fachmann durchgeführt wird. In manchen Ländern ist dies sogar vorgeschrieben.

Aus DE 199 40 969 A1 ist eine Vorrichtung zum Spannen des Lenkkopflagers bekannt. Diese weist einen Ring auf, der klemmend am Gabelschaft fixiert wird. Innerhalb des Rings sind zwei ringförmige Elemente mit Stirnverzahnung angeordnet. Eines der beiden ringförmigen Elemente ist gegen Verdrehen gesichert, kann jedoch axial verschoben werden. Durch Verdrehen des anderen ringförmigen Elements erfolgt ein Verschieben des axial verschiebbaren, ringförmigen Elements zum Spannen des Lenkkopflagers. DE 199 40 969 A1 offenbart die folgenden Merkmale des Anspruchs 1; Lager-Halteelement für Fahrrad-Steuersatzlager, mit einem Basiselement, das in montiertem Zustand einen Gabelschaft zumindest teilweise umgibt.

Aufgabe der Erfindung ist es, ein Lager-Halteelement für Fahrrad-Steuersatzlager zu schaffen, durch das eine Justage der Steuersatzlager auch bei einer Demontage des Vorbaus beibehalten bleibt bzw. ohne Vorbau erfolgt.

Die Lösung der Aufgabe erfolgt erfindungsgemäß durch ein Lager-Halteelement gemäß Anspruch 1.

Das erfindungsgemäße Lager-Halteelement für Fahrrad-Steuersatzlager weist ein Basiselement auf, das in montiertem Zustand einen Gabelschaft zumindest teilweise, vorzugsweise vollständig umgibt. Von dem Basiselement wird ein Klemmelement gehalten. Das Klemmelement umgibt in montiertem Zustand einen Gabelschaft wiederum zumindest teilweise, insbesondere vollständig. Vorzugsweise ist das Klemmelement innerhalb des Basiselements angeordnet bzw. von dem Basiselement zumindest teilweise umgeben. Des Weiteren ist mit dem Basiselement ein Klemmmittel, das beispielsweise Rastelemente aufweisen kann, und bei dem es sich in besonders bevorzugter Ausführungsform um eine Schraube handelt, verbunden. Mit Hilfe des Klemmmittels kann ein klemmendes Fixieren des Klemmelements am Gabelschaft erfolgen. Das Klemmmittel wirkt somit zum klemmenden Fixieren des Klemmelements am Gabelschaft auf das Klemmelement ein.

Da das erfindungsgemäße Lager-Halteelement klemmend am Gabelschaft fixiert werden kann, ist es hierdurch möglich, den Vorbau zu entfernen, ohne dass sich die Vorspannung bzw. die Justage der Steuersatzlager verändert. Es kann somit anschließend der Vorbau wieder montiert werden, wobei die Vorspannung bzw. Justage der Steuersatzlager nicht neu erfolgen muss. Dies ist beispielsweise zum Auswechseln von Vorbauten vorteilhaft. Auch wenn ein Fahrrad, insbesondere aus Platzgründen ohne Vorbau transportiert werden soll, ist dies möglich, da das Montieren des Vorbaus auch ohne Fachkenntnisse erfolgen kann, da hierbei keine Justage der Steuersatzlager erfolgen muss. Dies ist insbesondere beim Versand von Fahrrädern in Transportkartons vorteilhaft. In einer besonders bevorzugten Ausführungsform des erfindungsgemäßen Lager-Halteelements weist das Basiselement eine geschlossene Kontur auf und umgibt in montiertem Zustand den Gabelschaft somit vollständig. Das Basiselement kann hierbei gleichzeitig auch als Abdeckelement für das obere Steuersatzlager dienen und schützt den Steuersatz somit beispielsweise vor Verschmutzungen.

Vorzugsweise weist das Basiselement einen Aufnahmeansatz zur Aufnahme des Klemmmittels auf. Der Aufnahmeansatz ist hierbei vorzugsweise einstückig mit dem Befestigungselement ausgebildet und stellt eine Verdickung dar, in der das Klemmmittel zumindest teilweise aufgenommen werden kann. Bevorzugt ist es, dass das Klemmmittel vollständig in den Aufnahmeansatz aufgenommen ist. Hierbei ist es des Weiteren bevorzugt, dass der Aufnahmeansatz ein Gewinde zur Aufnahme eines insbesondere als Schraube ausgebildeten Klemmmittels aufweist. Besonders bevorzugt ist es, dass es sich um eine Madenschraube handelt.

Bei einer besonders bevorzugten Weiterbildung der Erfindung weist das Klemmelement einen Klemmansatz auf. Dieser ist vorzugsweise einstückig mit dem Klemmelement verbunden bzw. ausgebildet. Auf dem Klemmansatz wirkt das Klemmmittel ein. Das Klemmmittel übt hierbei insbesondere eine Druckkraft auf den Klemmansatz aus, so dass hierdurch ein Verformen des Klemmelements und somit ein klemmendes Fixieren des Klemmelements am Gabelschaft erfolgt.

Hierzu ist es des Weiteren bevorzugt, dass der Klemmansatz eine Anlagefläche für das Klemmmittel, bei dem es sich insbesondere um eine Madenschraube handelt, aufweist. Die Anlagefläche ist hierbei vorzugsweise im Wesentlichen senkrecht zu Klemmrichtung, d.h. senkrecht zur Bewegungsrichtung des Klemmmittels. Die Anlagefläche weist hierbei einen Winkel von 90° +/- 20° zur Klemmrichtung auf.

Des Weiteren ist es bevorzugt, dass das Klemmelement zumindest teilweise elastisch verformbar ist. Hierdurch ist sichergestellt, dass das Klemmelement zumindest teilweise, insbesondere vollständig am Gabelschaft anliegt, so dass eine gute Übertragung der Klemmkraft erfolgen kann.

Vorzugsweise ist das Klemmelement über Stege mit dem Basiselement verbunden. Insbesondere sind mindestens zwei, vorzugsweise drei Stege vorgesehen. In einer bevorzugten Ausführungsform sind das Basiselement und Klemmelement einstückig ausgebildet. Hierbei ist es bevorzugt, dass sowohl der Klemmansatz ebenfalls einstückig mit dem Klemmelement als auch der Aufnahmeansatz einstückig mit dem Basiselement verbunden ist. Bei dieser Ausführungsform weist das Lager-Halteelement nur zwei Bauteile auf, da zusätzlich zu dem einstückig ausgebildeten Klemmelement und Basiselement nur noch das Klemmmittel selbst, insbesondere die Madenschraube vorgesehen ist.

Zur verbesserten Verformbarkeit bzw. Beweglichkeit des Klemmelements ist es möglich, dass in mindestens einem oder mehreren Stegen Gelenke vorgesehen sind. Die Gelenkachse verläuft hierbei vorzugsweise im Wesentlichen parallel zur Längsrichtung des Gabelschafts in montiertem Zustand.

Nachfolgend wird die Erfindung anhand bevorzugter Ausführungsformen unter Bezugnahme auf die anliegenden Zeichnungen näher erläutert:
Es zeigen:
- Fig. 1: eine schematische Draufsicht einer ersten bevorzugten Ausführungsform des Lager-Halteelements, und
- Fig. 2: eine schematische Draufsicht einer zweiten bevorzugten Ausführungsform des Lager-Halteelements.

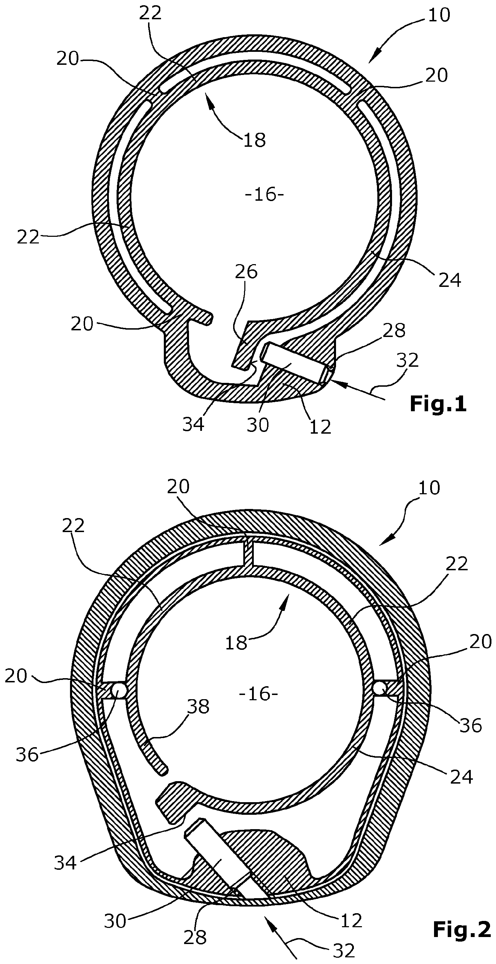

Das erfindungsgemäße Lager-Halteelement für Fahrrad-Steuersatzlager weist ein Basiselement 10 auf. Dieses ist im dargestellten Ausführungsbeispiel (Fig. 1) teilringförmig ausgebildet und weist ca. einen ¾-Ring auf. Auf der in Fig. 1 unteren Seite weist das Basiselement 10 einen Aufnahme-Ansatz 12 auf, der über ein Verbindungselement 14 wieder mit dem teilringförmigen Bereich des Basiselements 10 verbunden ist. Das Basiselement 10 weist somit eine in sich geschlossene Kontur auf. Das Basiselement 10 umgibt in montiertem Zustand einen Gabelschaft. Dieser ist in Fig. 1 nicht dargestellt, würde jedoch senkrecht zur Zeichenebene durch die Öffnung 16 hindurch konzentrisch verlaufen.

Das Basiselement 10 ist mit einem innerhalb des Basiselements 10 angeordneten Klemmelement 18 über im dargestellten Ausführungsbeispiel drei Stege 20 verbunden. Zwischen den Stegen 20 weist das Klemmelement 18 jeweils ringsegmentförmige Bereiche 22 auf. Im dargestellten Ausführungsbeispiel handelt es sich jeweils um etwa ¼-Ringsegmente. Ein weiteres Ringsegment 24 ist nur mit einem Steg 20 verbunden und weist somit ein freies Ende auf. Dieses ist als Klemmansatz 26 ausgebildet.

In dem Aufnahmeansatz 12 des Basiselements 10 ist eine Durchgangsöffnung mit einem Gewinde 28 vorgesehen. In dieses kann als Klemmmittel 30 eine Madenschraube eingeschraubt werden. Durch Einschrauben der Madenschraube in Richtung eines Pfeils 32 wird eine Klemmkraft auf eine Anlagefläche 34 des Klemmansatzes 26 ausgeübt. Hierdurch erfolgt ein Verformen des Ringsegments 24, so dass eine klemmende Befestigung an dem Gabelschaft erfolgt. Da auch die ringsegmentförmigen Bereiche 22 nur über Stege 20 mit dem Basiselement 10 verbunden sind, sind auch die ringförmigen Bereiche 22 elastisch verformbar, so dass auch diese an der Außenseite des Gabelschafts anliegen. Hierdurch ist eine gleichmäßige Klemmkraft sichergestellt.

Das in Fig. 1 in Draufsicht dargestellte Lager-Halteelement weist eine geringe Höhe bzw. Dicke von ggf. weniger als 5 mm auf.

Zur Montage erfolgt somit beispielsweise zunächst ein Einstecken des Gabelschafts in das Gabelrohr. Anschließend wird von oben über den Gabelschaft das Lager-Halteelement aufgesteckt, jedoch noch nicht fixiert. Im nächsten Schritt erfolgt über den Vorbau oder ein anderes Element, bei dem es sich auch um ein Werkzeug handeln kann, ein Justieren bzw. Vorspannen der beiden Steuersatzlager. Sobald diese Justage erfolgt ist, wird das Klemmmittel 30 des Lager-Halteelements angezogen, so dass das Lager-Halteelement klemmend am Gabelschaft fixiert ist. Anschließend kann der Vorbau oder das zur Justage der Steuersatzlager verwendete Werkzeug wieder entfernt werden, wobei das Lager-Halteelement gewährleistet, dass die entsprechende Justage der Steuersatzlager beibehalten bleibt.

Bei der in Fig. 2 dargestellten Ausführungsform sind ähnliche und identische Bauteile mit denselben Bezugszeichen gekennzeichnet. Im Wesentlichen weist die in Fig. 2 dargestellte Ausführungsform dieselben Bauteile und dieselbe Funktion auf. Ein wesentlicher Unterschied besteht darin, dass zwei einander gegenüberliegende Stege 20 zusätzlich ein Gelenk 36 aufweisen. Hierdurch ist eine noch gleichmäßigere Verteilung der Klemmkraft an der Innenseite des Klemmelements 18 gewährleistet.

Des Weiteren ist die Ausgestaltung des Basiselements im Bereich des Aufnahmeansatzes 12 etwas anders, so dass der Aufnahmeansatz 12 vollständig innerhalb eines umlaufenden Basiselements 10 angeordnet ist. Ferner ist das Basiselement 10 derart ausgebildet, dass es gleichzeitig als Abdeckung für ein ggf. unter dem Basiselement 10 angeordnetes Lager des Steuersatzes dient.

Ein weiterer geringfügiger Unterschied besteht darin, dass das Klemmelement 18 neben den ringsegmentförmigen Bereichen 22 und dem Ringsegment 24 einen weiteren über den in Fig. 2 linken Steg hinausgehenden Ansatz 38 aufweist.

Die Höhe des Lager-Halteelements, wie es in Fig. 2 dargestellt ist, beträgt ebenfalls ggf. weniger als 5 mm. Die Montage erfolgt beispielsweise, wie vorstehend anhand des in Fig. 1 dargestellten Lager-Halteelements beschrieben.

## Patentansprüche

1. Lager-Halteelement für Fahrrad-Steuersatzlager, mit
einem Basiselement (10), das in montiertem Zustand einen Gabelschaft zumindest teilweise umgibt,
einem vom Basiselement (10) gehaltenen Klemmelement (18), das in montiertem Zustand den Gabelschaft zumindest teilweise umgibt, und
einen mit dem Basiselement (10) verbundenen Klemmmittel (30), das zum klemmenden Fixieren des Klemmelements (18) am Gabelschaft auf das Klemmelement (18) einwirkt.

2. Lager-Halteelement nach Anspruch 1, **dadurch gekennzeichnet, dass** das Basiselement (10) eine geschlossene Kontur aufweist, die in montiertem Zustand den Gabelschaft vollständig umgibt.

3. Lager-Halteelement nach Anspruch 1 oder 2, **dadurch gekennzeichnet, dass** das Basiselement (10) einen Aufnahmeansatz (12) zur Aufnahme des Klemmmittels (30) aufweist.

4. Lager-Halteelement nach Anspruch 3, **dadurch gekennzeichnet, dass** in dem Aufnahmeansatz (12) ein Gewinde (28) zur Aufnahme eines als Schraube, insbesondere Madenschraube ausgebildeten Klemmmittels (30) vorgesehen ist.

5. Lager-Halteelement nach einem der Ansprüche 1 - 4, **dadurch gekennzeichnet, dass** das Klemmelement (18) einen Klemmansatz (26) aufweist, auf den das Klemmmittel (30) einwirkt.

6. Lager-Halteelement nach Anspruch 5, **dadurch gekennzeichnet, dass** der Klemmansatz (26) eine zu einer Klemmrichtung (32) im Wesentlichen senkrechte Anlagefläche (34) aufweist.

7. Lager-Halteelement nach einem der Ansprüche 1 - 6, **dadurch gekennzeichnet, dass** das Klemmelement (18) zumindest teilweise elastisch verformbar ist.

8. Lager-Halteelement nach einem der Ansprüche 1 - 7, **dadurch gekennzeichnet, dass** das Klemmelement (18) über Stege (20) mit dem Basiselement (10) verbunden ist.

9. Lager-Halteelement nach einem der Ansprüche 1 - 8, **dadurch gekennzeichnet, dass** zumindest einer der Stege (20) ein Gelenk (36) aufweist.

## Claims

1. A bearing retaining element for bicycle headset bearings, comprising
a basic element (10) which, in the mounted state, at least partly surrounds a steerer tube,
a clamping element (18) retained by said basic element (10), which clamping element, in the mounted state, at least partly surrounds said steerer tube, and
a clamping means (30) connected with said basic element (10), which clamping means acts upon said clamping element (18) for clampingly fixing said clamping element (18) to said steerer tube.

2. The bearing retaining element according to claim 1, **characterized in that** the basic element (10) has a closed contour which, in the mounted state, completely surrounds the steerer tube.

3. The bearing retaining element according to claim 1 or 2, **characterized in that** the basic element (10) comprises an accommodation projection (12) for accommodating the clamping means (30).

4. The bearing retaining element according to claim 3, **characterized in that** in the accommodation projection (12) a thread (28) for accommodating a clamping means (30) configured as a screw, in particular a grub screw, is provided.

5. The bearing retaining element according to one of claims 1-4, **characterized in that** the clamping element (18) comprises a clamping projection (26) upon which the clamping means (30) acts.

6. The bearing retaining element according to claim 5, **characterized in that** the clamping projection (26) comprises a contact surface (34) extending substantially perpendicularly to the clamping direction (32).

7. The bearing retaining element according to one of claims 1-6, **characterized in that** the clamping element (18) is at least partly elastically deformable.

8. The bearing retaining element according to one of claims 1-7, **characterized in that** the clamping element (18) is connected with the basic element (10) via bars (20).

9. The bearing retaining element according to one of claims 1-8, **characterized in that** at least one of the bars (20) comprises a hinge (36).

## Revendications

1. Elément de maintien de roulement pour roulement de jeu de direction de bicyclette, doté
d'un élément de base (10), lequel entoure au moins en partie une tige de fourche dans l'état monté,
d'un élément de serrage (18) maintenu par l'élément de base (10), lequel entoure au moins en partie la tige de fourche dans l'état monté, et
d'un moyen de serrage (30) relié à l'élément de base (10), lequel opère sur l'élément de serrage (18) afin de bloquer par pincement l'élément de serrage (18) sur la tige de fourche.

2. Elément de maintien de roulement selon la revendication 1, **caractérisé en ce que** l'élément de base (10) comporte un contour fermé, lequel entoure entièrement la tige de fourche dans l'état monté.

3. Elément de maintien de roulement selon la revendication 1 ou 2, **caractérisé en ce que** l'élément de base (10) comporte un appendice de logement (12) pour loger le moyen de serrage (30).

4. Elément de maintien de roulement selon la revendication 3, **caractérisé en ce qu'**un filetage (28) est prévu dans l'appendice de logement (12) afin de loger un moyen de serrage (30) réalisé comme vis, en particulier comme vis sans tête.

5. Elément de maintien de roulement selon l'une des revendications 1-4, **caractérisé en ce que** l'élément de serrage (18) comporte un appendice de serrage (26), sur lequel opère le moyen de serrage (30).

6. Elément de maintien de roulement selon la revendication 5, **caractérisé en ce que** l'appendice de serrage (26) comporte une surface d'appui (34) sensiblement perpendiculaire à une direction de serrage (32) .

7. Elément de maintien de roulement selon l'une des revendications 1-6, **caractérisé en ce que** la pièce de serrage (18) est au moins en partie élastiquement déformable.

8. Elément de maintien de roulement selon l'une des revendications 1-7, **caractérisé en ce que** le dispositif de serrage (18) est relié à l'élément de base (10) par le biais de traverses (20).

9. Elément de maintien de roulement selon l'une des revendications 1-8, **caractérisé en ce qu'**au moins une des traverses (20) comporte une articulation (36).
